# DEMANDE DE BREVET EUROPEEN

(11) **EP 4 653 483 A1**
(43) Date de publication de la demande: **26.11.2025**
(21) Numéro de dépôt: 25305721.0
(22) Date de dépôt: 20.05.2025
(51) Int. Cl.: C08G 59/42, C08G 63/91, C08L 63/00, C08L 67/04

(54) **VITRIMERE A BASE DE PHA**

(30) Priorité: 22.05.2024 FR 2405216
(71) Demandeur: École Nationale Supérieure de Chimie, 35000 Rennes (FR); Université de Rennes, 35700 Rennes (FR); Centre National de la Recherche Scientifique, 75016 Paris (FR)
(72) Inventeur: Lemiègre, Loïc, 35690 Acigné (FR); Audic, Jean-Luc, 35160 Montfort-sur-Meu (FR)
(74) Mandataire: Novagraaf Technologies

(57) **Abrégé**

La présente invention appartient au domaine de la fabrication de plastique et plus particulièrement aux plastifiants.

L'invention se rapporte à un vitrimère comprenant, sous une forme réticulée, une huile époxydée, un agent de réticulation et un polyhydroxyalcanoate (PHA) ; son procédé de fabrication et son utilisation.

## Description

### Domaine technique de l'invention

La présente invention appartient au domaine de la fabrication de plastique et plus particulièrement aux plastifiants.

L'invention se rapporte à un vitrimère comprenant, sous une forme réticulée, une huile époxydée, un agent de réticulation et un polyhydroxyalcanoate (PHA) ; son procédé de fabrication et son utilisation.

### Art antérieur

La majorité des plastifiants communs utilisés dans la fabrication des plastiques courants sont des esters, dont les plus répandus sont le di(2-éthylhexyl) adipate (DEHA ou DOA) ou di(2-éthylhexyl) phtalate (DEHP ou DOP). Ces additifs, issus de la pétrochimie, sont toutefois sujet à l'exsudation et ont des effets néfastes pour la santé humaine.

Depuis des décennies, les huiles végétales époxydées, dont principalement l'huile de soja époxydée (HSE), sont utilisées massivement comme plastifiants et/ou stabilisants végétaux dans la formulation des plastiques les plus communs comme le PVC **[1].**

Ces huiles époxydées ont plus récemment été utilisées pour plastifier des matériaux biosourcés dans le but d'obtenir des matériaux plastiques aux propriétés ajustées plus vertueux d'un point de vue environnemental **[2].** Ces huiles époxydées ont ainsi été utilisées dans la formulation de différents bioplastiques comme l'acide polylactique (PLA) ou encore les polyesters de la famille des polyhydroxyalcanoates (PHA) **[3]-[5].**

En parallèle de ces travaux, il a récemment été découvert que les huiles végétales époxydées pouvaient servir à synthétiser une nouvelle famille de polymères : les vitrimères **[6].** Dans ce cas, l'huile végétale ne constitue plus un additif dans une matrice polymère, mais elle constitue à proprement parler le matériau plastique à part entière obtenu par réticulation de l'huile époxydée. Ces vitrimères, en plus d'être biosourcés présentent des propriétés tout-à-fait remarquables comme la mémoire de forme ou une aptitude à l'autoréparation. De plus, les vitrimères permettent de surmonter l'incompatibilité entre les polymères qui empêche généralement d'avoir un matériau homogène issus du mélange de deux polymères .

Toutefois, leurs propriétés mécaniques demeurent relativement limitées : ces matériaux souples sont relativement peu extensibles et ils sont sensibles aux déchirures avec entailles. Pour ces raisons, les applications des vitrimères dans le domaine courant restent encore limitées.

Ainsi, un besoin existe concernant des vitrimères permettant d'obtenir des matériaux plastiques aux propriétés mécaniques ajustées plus vertueux d'un point de vue environnemental.

### Exposé de l'invention

La présente invention a pour objet un vitrimère qui résout de manière surprenante les inconvénients mentionnées précédemment. De plus, le vitrimère selon l'invention, est particulièrement efficace pour surmonter l'incompatibilité entre les polymères. De façon surprenante, les inventeurs ont observé que les PHA de petites tailles sont capables de s'incorporer de façon homogène dans le vitrimères lors de sa formation. En effet, les extrémités hydroxyles et carboxyliques des PHA permettent, via leur réaction avec les époxydes de l'huile époxydée, de générer au moins partiellement des copolymères (époxy)vitrimères-(oligo)PHA qui permettent la compatibilité PHA/vitrimère.

Un premier objet de la présente invention est un vitrimère comprenant, sous une forme réticulée, une huile époxydée, un agent de réticulation et un polyhydroxyalcanoate (PHA) de formule I : 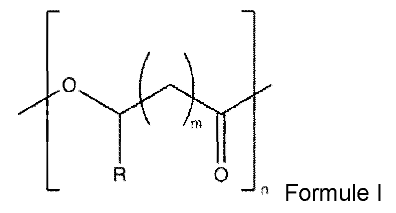 dans laquelle,
le, ou lesdits motifs pris indépendamment, étant tel que :
m varie de 0 à 20, de préférence de 1 à 6;
R est choisi parmi H et une chaine hydrocarbonée en C₁ à Ca ; et
n varie de 5 à 200.

Par « vitrimère », on entend, dans la présente, un type de polymère organique classé entre les thermodurcissables et les thermoplastiques en ce qu'il s'agit d'un matériau insoluble et mis en forme comme les thermodurcissables tout en étant souples, c'est-à-dire ayant une résistance à la traction inférieure à 3 000 MPa, et malléables à chaud comme les thermoplastiques.

Par « réticulée », on entend, dans la présente, que les molécules d'oligomères ou de polymères sont liées les unes aux autres par des liaisons covalentes via un agent de réticulation.

Par « huile époxydée », on entend, dans la présente, une huile ayant été soumise à une époxydation partielle ou totale, c'est-à-dire un processus chimique consistant à transformer un composé organique en une molécule possédant un cycle à trois atomes, dont un atome d'oxygène et deux atomes de carbone liés par des liaisons covalentes (fonction époxyde ou oxirane). Par « époxydation partielle », on entend, dans la présente que toutes les doubles liaisons ou insaturations de la molécule (l'huile) ne sont pas intégralement transformées en époxyde/oxirane.

Avantageusement, l'huile époxydée peut être issue d'une huile végétale, animale et un mélange quelconque de ces dernières, de préférence l'huile époxydée est une huile végétale époxydée.

Avantageusement, l'huile végétale peut être choisie parmi les huiles ayant au moins deux insaturations, de préférence l'huile végétale est choisie parmi l'huile de soja, de colza, de tournesol, d'olive, de palme, de lin, de graine de brocoli, de jatropha, de karanja, de polanga, de mahua et un mélange quelconque de ces dernières.

Par « agent de réticulation », on entend, dans la présente, un réactif permettant la formation d'un ou de plusieurs réseaux tridimensionnels, par voie chimique ou physique, c'est-à-dire la formation de liaisons chimiques entre des chaînes macromoléculaires.

Avantageusement, l'agent de réticulation peut être di-, tri- ou tetra-fonctionnel.

Avantageusement, l'agent de réticulation peut comprendre au moins deux fonctions acides, de préférence de deux à quatre fonctions acide carboxylique.

Par « fonction acide carboxylique », on entend, dans la présente, l'entité COO-R' avec R' un hydrogène.

Avantageusement, l'agent de réticulation peut comprendre au moins une chaine aliphatique, de préférence un groupe aromatique, comprenant de 2 à 20 atomes de carbone pour la chaine aliphatique et de 4 à 20 atomes de carbone pour le groupe aromatique.

Avantageusement, l'agent de réticulation peut être soluble à une température comprise de 20°C à 250°C, de préférence de 20 à 200 °C, dans l'huile époxydée et/ou peut avoir un point de fusion inférieur à 200°C, de préférence inférieur à 180°C.

Avantageusement, l'agent de réticulation peut avoir une structure choisie parmi les structures suivantes : 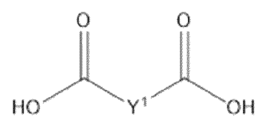 ou 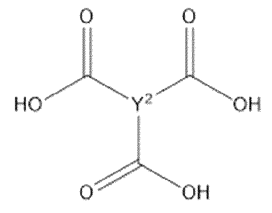 dans lesquelles Y¹ est une liaison covalente ou une chaine hydrocarbonée, linéaire ou ramifiée, en C₁ à C₁₈, optionnellement substituée par un cycle aromatique en C₄ à C₂₀ et Y² est une chaine hydrocarbonée, linéaire ou ramifiée, en C₁ à C₁₇, optionnellement substitué par un cycle aromatique en C₄ à C₂₀.

Avantageusement, l'agent de réticulation peut être un polyacide, de préférence un diacide ou un triacide, et de manière encore préféré choisi parmi les acides glutarique, citrique, adipique, subérique, sébacique, dodécanedioïque, tétradécanedioïque, hexadecanedioïque, o-phénylènediacétique et un mélange quelconque de ces derniers.

Avantageusement, le vitrimère selon l'invention peut comprendre en outre un agent époxydé.

Par « agent époxydé », on entend, dans la présente, un second agent de réticulation, optionnel. Il s'agit d'un composé comprenant deux ou plusieurs fonctions époxydes permettant d'accroître la densité de réticulation et présentant une réactivité accrue avec l'agent de réticulation par rapport à la réactivité des huiles époxydées avec l'agent de réticulation. Ainsi, il permet d'accroître la résistance mécanique et l'allongement des matériaux obtenus tout en améliorant la vitesse de réaction permettant d'obtenir un vitrimère selon l'invention.

Avantageusement, l'agent époxydé peut être choisi parmi l'éther diglycidylique de résorcinol (n° CAS 101-90-6), l'éther triglycidylique de resveratrol (n°20CAS 1628749-20-1), l'éther diglycidylique d'alcool vanillique (n° CAS 1584677-14-4), le 3,4-Epoxycyclohexylmethyl (n° CAS 2386-87-0), l'éther triglycidylique tris(4-hydroxyphenyl)methane (n° CAS 66072-38-6), l'éther diglycidylique methoxyhydroquinone (n° CAS 1584677-13-3), l'éther diglycidylique d'isosorbide (n° CAS 13374-44-2) et un mélange quelconque de ces derniers.

Par « polyhydroxyalcanoate », on entend, dans la présente, un polyester naturel issu d'une fermentation bactérienne de formule III : 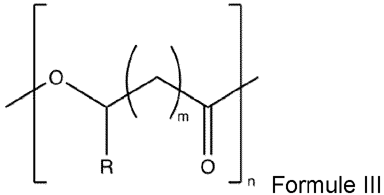 dans laquelle,
le, ou lesdits motifs pris indépendamment, étant tel que :
m est supérieur ou égal à 0 ;
R est choisi parmi H et une chaine hydrocarbonée comprenant au moins 1 atome de carbone ; et
n est supérieur ou égal à 2.

Suivant la longueur de la chaîne latérale R, trois types de PHA peuvent être différenciés : les scl-PHA pour lesquels R comprend moins de 5 atomes de carbone, les mcl-PHA pour lesquels R comprend de 5 à 13 atomes de carbone et les Icl-PHA pour lesquels R comprend au moins 14 atomes de carbone. La nature des bactéries, leurs conditions de croissance et le choix du substrat influent aussi sur la structure moléculaire des PHA.

Par « motif », on entend, dans la présente, est un groupement constitué d'un ensemble d'atomes qui se répète tout au long d'une chaine. Le nombre de répétition est défini, dans la présente, par la valeur « n ».

Par « une chaine hydrocarbonée en C₁ à C₈ », on entend, dans la présente, un radical, linéaire ou ramifié, comprenant 1 à 8 atomes de carbone, par exemple un méthyle, éthyle, propyle, butyle, pentyle, hexyle, heptyle; octyle.

Avantageusement, le polyhydroxyalcanoate de formule I peuvent être choisi parmi : 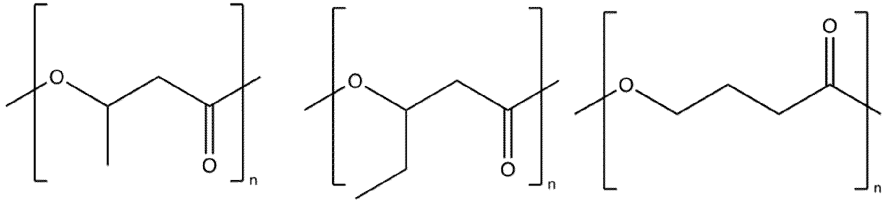 dans lesquels n varie de 5 à 200.

Avantageusement, le polyhydroxyalcanoate de formule I peut comprendre plusieurs motifs différents (c'est-à-dire que la valeur de m ou le groupe R peuvent être identiques ou différents d'un motif à un autre).

Avantageusement, le polyhydroxyalcanoate de formule I peut comprendre 2, 3, 4, 5 ou 6 motifs différents, de préférence 2.

Avantageusement, le polyhydroxyalcanoate de formule I peut comprendre plusieurs groupes terminaux indépendamment choisi parmi H, OH, COOH.

Par « groupements terminaux », on entend, dans la présente, des groupements liés à un motif et constituant l'extrémité d'une chaîne d'un ou plusieurs motifs.

Avantageusement, le vitrimère selon l'invention est linéaire ou ramifié.

Avantageusement, le vitrimère selon l'invention peut avoir la structure suivante de formule IV : 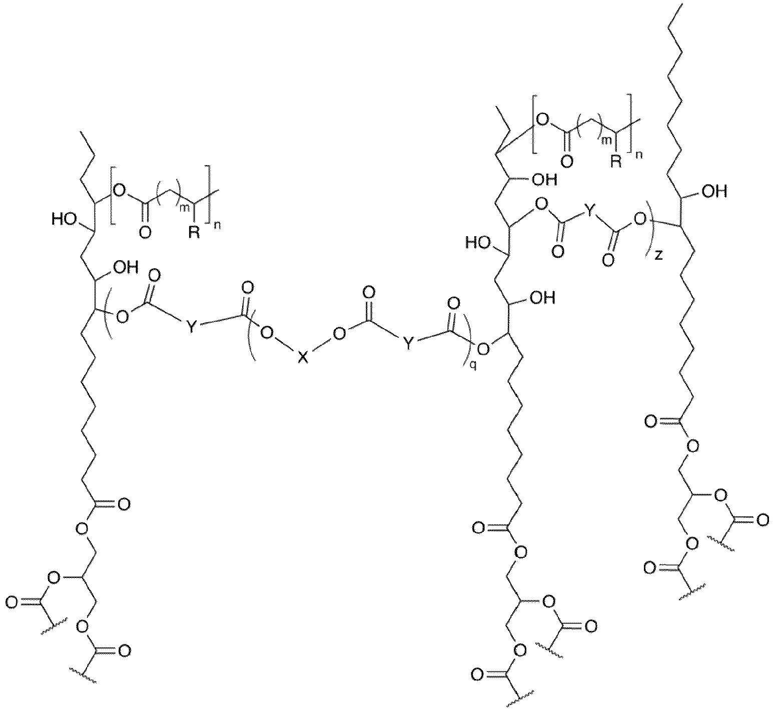 dans laquelle
m varie de 0 à 20, de préférence de 1 à 6 ;
R est choisi parmi H et une chaine hydrocarbonée en C₁ à C₈ ;
n varie de 5 à 200 ;
q varie de 0 à 500 ;
z correspond à un taux de réticulation allant de 50% à 100% ; et
Y est une liaison covalente ou une chaine hydrocarbonée, linéaire ou ramifiée, en C₁ à C₁₈ optionnellement substituée par un cycle aromatique en C₄ à C₂₀ ;
X est un groupement carboné en C₄ à C₃₀, comprenant au moins deux hétéroatomes ; 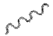
représente un point de connexion à d'autres ramifications réticulées selon la formule IV.

Avantageusement, le vitrimère selon l'invention peut avoir la structure selon la formule IV, dans laquelle l'huile époxydée est une huile choisie parmi l'huile de soja, de colza, de tournesol, d'olive, de palme, de lin, de graine de brocoli, de jatropha, de karanja, de polanga, de mahua et un mélange quelconque de ces dernières.

Avantageusement, le vitrimère selon l'invention peut comprendre le même motif, c'est-à-dire le même diacide ou triacide, sur les deux chaines grasses de la structure du triglycérique (via les points de connexions

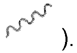

Par « taux de réticulation », on entend, dans la présente, que la réaction mise en œuvre pour la formation du vitrimère selon l'invention est quantitative et que toutes les espèces ont réagi, c'est-à-dire que toutes les fonctions époxydes disponibles ont réagi avec les fonctions acides disponibles. Le taux de réticulation peut varier de 50% à 100%, de préférence de 75% à 100% et de manière encore préféré que le taux de réticulation peut être de 100%.

Avantageusement, le taux de réticulation peut être de 50%, lorsque la réaction implique en moyenne 2 fonctions époxydes pour 1 fonction acide ou 2 fonctions acides pour 1 fonction époxyde.

Avantageusement, le taux de réticulation peut être de 75%, lorsque la réaction implique en moyenne 4 fonctions époxydes pour 3 fonctions acides ou 4 fonctions acides pour 3 fonctions époxydes.

Avantageusement, le taux de réticulation peut être de 100%, lorsque la réaction implique en moyenne 1 fonction époxyde pour 1 fonction acide.

Un autre objet de la présente invention est l'utilisation d'un vitrimère selon l'invention pour fabriquer un produit plastique.

Avantageusement, le vitrimère selon l'invention peut substituer partiellement ou totalement un plastique pétrosourcé dans un produit plastique lors de la fabrication dudit produit plastique.

Par « plastique pétrosourcé », on entend, dans la présente, un plastique provenant de ressources fossiles, par exemple du poly(téréphtalate d'éthylène) (PET), du polyéthylène (PE), du polypropylène (PP), du polychlorure de vinyle (PVC) et un mélange quelconque de ces derniers.

Par « partiellement », on entend, dans la présente, que le produit obtenu comprend un vitrimère selon l'invention et un plastique pétrosourcé, de préférence en un ratio vitrimère/plastique de 50/50 en masse.

Par « totalement », on entend, dans la présente, que le produit obtenu comprend un vitrimère selon l'invention et est exempt de plastique pétrosourcé.

Avantageusement, le produit plastique peut être souple ou rigide.

Par « souple », on entend, dans la présente, un matériau flexible et extensible.

Par « rigide », on entend, dans la présente, un matériau dur et résistant mécaniquement, c'est-à-dire ayant une résistance supérieure à 3 000 MPa.

Avantageusement, le produit plastique peut être choisi parmi un bijou fantaisie, une coque de téléphone portable, une monture de lunettes, de la vaisselle jetable, un set de table, une chaussure, une pochette plastique, un tapis antidérapant, un matériau amortisseur, un blindage et un allume feu.

Un autre objet de la présente invention est un procédé de fabrication d'un vitrimère selon l'invention comprenant une étape de réticulation d'une huile époxydée, d'un agent de réticulation et d'un polyhydroxyalcanoate de formule I : 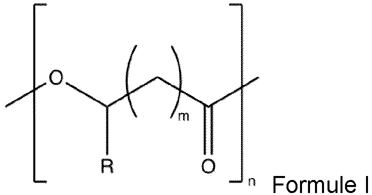 dans laquelle,
le, ou lesdits motifs pris indépendamment, étant tel que :
m varie de 0 à 20, de préférence de 1 à 6;
R est choisi parmi H et une chaine hydrocarbonée en C₁ à Ca ; et
n varie de 5 à 200,
et obtention du vitrimère.

Par « étape de réticulation », on entend, dans la présente, une étape permettant la formation d'un ou de plusieurs réseaux tridimensionnels, par voie chimique ou physique, c'est-à-dire la formation de liaisons chimiques entre des chaînes macromoléculaires.

Avantageusement, l'étape de réticulation peut être réalisée avec ou sans solvant, de préférence sans solvant.

Avantageusement, l'huile époxydée peut être l'huile époxydée telle que définie précédemment.

Avantageusement, l'agent de réticulation peut être l'agent de réticulation tel que défini précédemment.

Avantageusement, l'étape de réticulation peut en outre être réalisée avec un agent époxydé.

Avantageusement, l'agent époxydé peut être l'agent époxydé tel que défini précédemment.

Avantageusement, l'étape de réticulation peut être réalisée avec 40 à 50 % en poids d'huile époxydée par rapport au poids total des composés utilisés lors de l'étape de réticulation, de préférence 40 à 45 %, et de manière encore préféré 43,7 %.

Avantageusement, l'étape de réticulation peut être réalisée avec 10 à 15 % en poids d'agent de réticulation par rapport au poids total des composés utilisés lors de l'étape de réticulation, de préférence 10 à 12,5 %, et de manière encore préféré 11,5 %.

Avantageusement, l'étape de réticulation peut être réalisée avec 20 à 30 % en poids de polyhydroxyalcanoate par rapport au poids total des composés utilisés lors de l'étape de réticulation, de préférence 25 à 30 %, et de manière encore préféré 28,6 %.

Avantageusement, l'étape de réticulation peut être réalisée avec moins de 30 % en poids de solvant par rapport au poids total des composés utilisés lors de l'étape de réticulation, de préférence moins de 20 %, et de manière encore préféré 15 %.

Avantageusement, l'étape de réticulation peut être réalisée avec moins de 80 % en poids d'agent époxydé par rapport au poids total des composés utilisés lors de l'étape de réticulation, de préférence 25 à 75 %, et de manière encore préféré 50 %.

Avantageusement, le solvant de l'étape de réticulation est un solvant organique, de préférence le toluène.

Avantageusement, l'étape de réticulation peut être réalisée à une température allant de 80°C à 200°C, de préférence de 150°C.

Avantageusement, l'étape de réticulation peut être réalisée pendant une durée allant de 30 min à 48h, de préférence 4 h.

Avantageusement, le procédé de fabrication d'un vitrimère selon l'invention, peut comprendre une étape préalable d'hydrolyse d'un polyhydroxyalcanoate de formule Il : 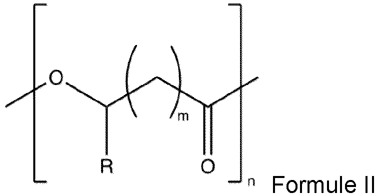 dans laquelle,
le, ou lesdits motifs pris indépendamment, étant tel que :
m varie de 0 à 20, de préférence de 1 à 6 ;
R est choisi parmi H et une chaine hydrocarbonée en C₁ à C₈ ; et
n varie de 10 à 2000 .

Par « étape d'hydrolyse », on entend, dans la présente, une étape de réaction chimique et enzymatique dans laquelle une liaison covalente est rompue par action d'une molécule d'eau. L'étape d'hydrolyse permet ainsi de générer des chaines polyester de tailles ajustées, par exemple de 10 à 50 unités monomères, dont les effets plastifiants sur les vitrimères sont remarquables.

Avantageusement, l'étape d'hydrolyse peut être une hydrolyse enzymatique, thermique ou chimique, de préférence chimique.

Avantageusement, l'étape d'hydrolyse peut être réalisée avec un solvant, de préférence le solvant de l'étape d'hydrolyse peut être choisi parmi le chloroforme, le dichlorométhane, des solvants éthérés, par exemple l'éther diéthylique et un quelconque mélange de ces derniers, de préférence le chloroforme et du dichlorométhane, et de manière encore préféré du chloroforme.

Avantageusement, l'étape d'hydrolyse peut être réalisée à une température comprise entre 40 et 100°C, de préférence 70°C.

Avantageusement, l'étape d'hydrolyse peut être réalisée pendant une durée comprise entre 15 min et 5 h, de préférence 3h.

### Brève description des figures

**Figure 1** : La figure 1 représente la courbe de traction de six échantillons préparés selon l'exemple 1 et comprenant un pourcentage molaire en EPO de 20 %.
**Figure 2** **:** La figure 2 représente la courbe de traction de six échantillons préparés selon l'exemple 1 et comprenant un pourcentage molaire en EPO de 30 %.
**Figure 3** **:** La figure 3 représente la courbe de traction de six échantillons préparés selon l'exemple 1 et comprenant un pourcentage molaire en EPO de 40 %.
**Figure 4** : La figure 4 représente la courbe de traction de six échantillons préparés selon l'exemple 1 et comprenant un pourcentage molaire en EPO de 50 %.
Figure 5 : La figure 5 représente la courbe de traction de six échantillons préparés selon l'exemple 1 et comprenant un pourcentage molaire en EPO de 60 %.

### EXEMPLE

D'autres avantages, buts et caractéristiques particulières de la présente invention ressortiront des exemples qui vont suivre, faits dans un but explicatif et nullement limitatif.

### Exemple 1 : Préparation d'un matériau vitrimère à base de PHA avec un agent de réticulation

De l'huile de soja époxydée (ESO, Aaron Chemicals ref AR00IM7I,20CAS n° 8013-07-8) est mélangée à de l'acide glutarique (AG, Sigma-Aldrich ref 8.00295.0100, CAS n°110-94-1) directement à 150°C jusqu'à fusion de l'acide. Un PHA partiellement hydrolysé (PHA Y1000P Tianan) est ensuite ajouté au mélange. Après avoir été homogénéisé, le mélange est placé à 150°C pendant 3h pour obtenir le matériau final. La quantité de PHA (n=20±2) est fixée à 20%, 30%, 40% et 50% massique.

Différent vitrimères ont ainsi été préparés et les différentes quantités de constituants sont restituées dans le tableau 1 ci-dessous.

**Tableau 1 : Proportions des constituants du mélange**

| % massique_{PHA} | m_{ESO} (g) | m_{AG} (g) | m_{PHA} (g) | mₜₒₜ (g) |
|---|---|---|---|---|
| 20 | 4,0 | 1,0 | 1,0 | 6,0 |
| 30 | 4,0 | 1,0 | 1,5 | 6,5 |
| 40 | 4,5 | 1,12 | 2,25 | 7,87 |
| 50 | 4,2 | 1,05 | 2,62 | 7,87 |

### Exemple 2 : Préparation d'un matériau vitrimère à base de PHA avec un agent de réticulation et un agent époxydé

De l'huile de soja époxydée (ESO, Aaron Chemicals ref AR00IM7I, CAS n° 8013-07-8) est mélangée à de l'acide glutarique (AG, Sigma-Aldrich ref 8.00295.0100, CAS n°110-94-1) directement à 150°C jusqu'à fusion de l'acide. Un PHA partiellement hydrolysé (PHA Y1000P Tianan) ainsi qu'un agent époxydé (EPO, 3,4-Epoxycyclohexylmethyl 3,4-epoxycyclohexanecarboxylate ref 407208, CAS n°2386-87-0) sont ensuite ajoutés au mélange. Après avoir été homogénéisé, le mélange est placé à 150°C pendant 3h pour obtenir le matériau final. Les quantités de PHA (n=20±2) sont fixées à 40% massique, les teneurs en EPO varient de 20% à 60% molaire par rapport aux fonctions époxydes de l'huile de soja époxydée.

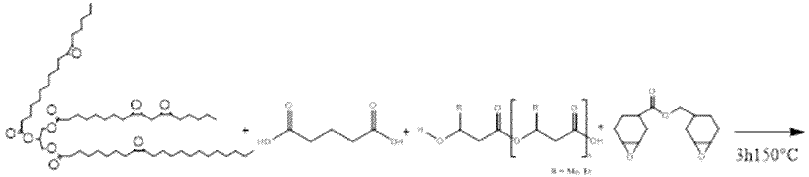

Différent vitrimères ont ainsi été préparés et les différentes quantités de constituants sont restituées dans le tableau 2 ci-dessous.

**Tableau 2 : Proportions des constituants du mélange**

| % molaire_{EPO} | m_{ESO} (g) | m_{EPO} (g) | m_{AG} (g) | m_{PHA} (g) | mₜₒₜ (g) |
|---|---|---|---|---|---|
| 20 | 4,1 | 0,272 | 1,168 | 2,216 | 7,75 |
| 30 | 3,9 | 0,443 | 1,208 | 2,221 | 7,77 |
| 40 | 3,6 | 0,637 | 1,234 | 2,188 | 7,66 |
| 50 | 3,4 | 0,903 | 1,323 | 2,25 | 7,87 |
| 60 | 3 | 1,195 | 1,376 | 2,228 | 7,8 |

### Exemple 3 : Mesure des paramètres d'un vitrimère

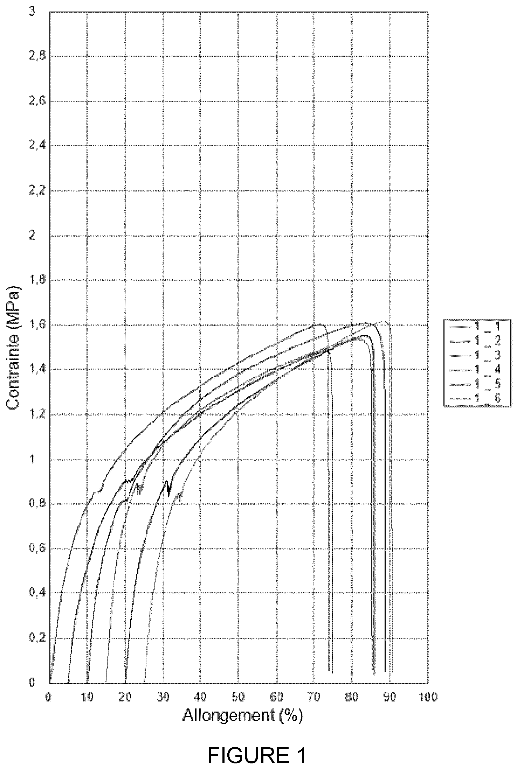

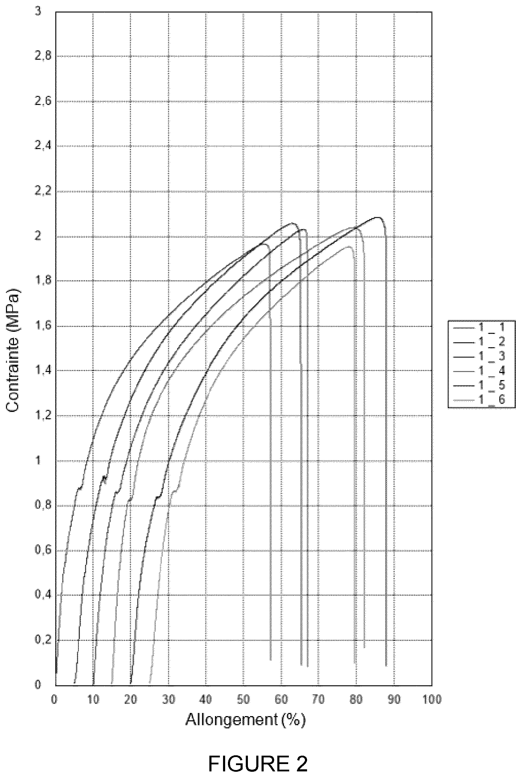

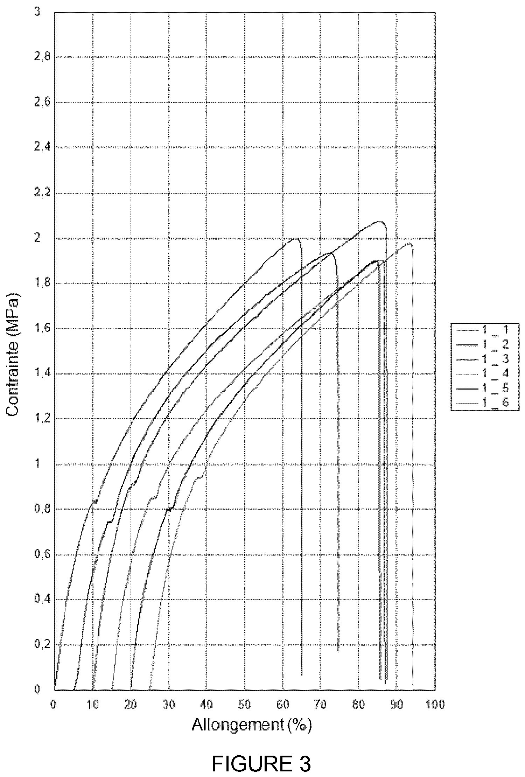

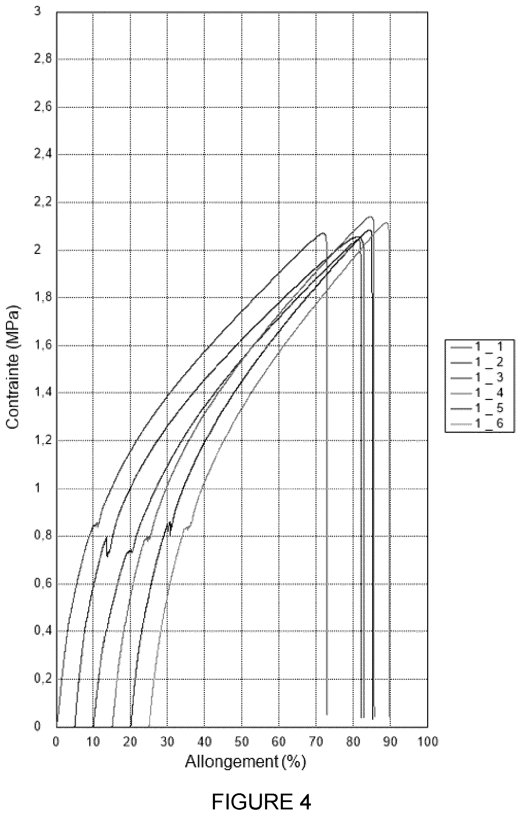

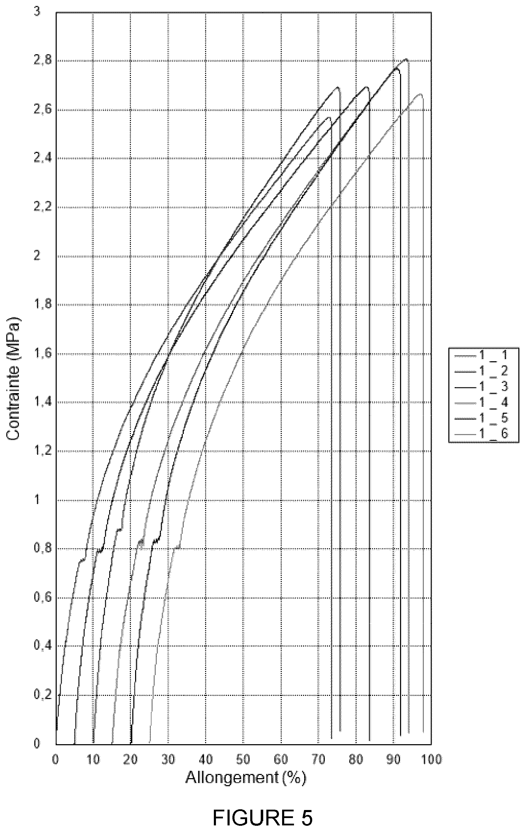

Dans cet exemple, différents paramètres des vitrimères obtenus selon les exemples 1 et 2 ont été mesurés : contrainte à la rupture, élongation à la rupture et module élastique (tableau 3 et 4 respectivement). Ces paramètres ont été mesurés à partir de courbes de traction (figures 1 à 5 pour les résultats de l'exemple 2) issues de courbe de tests de traction-allongement.

Ces tests sont réalisés via un appareil Shimadzu Autograph AGS-X équipé d'un capteur de 1 kN à température ambiante et à une vitesse de 50 mm.min⁻¹ sur des éprouvettes normalisées en forme d'altère (Type 1 BA iso 527). Les valeurs moyennes sont calculées sur un lot de 6 éprouvettes.

Le module élastique (ou module de Young) est calculé à l'aide du logiciel TRAPEZIUM-X software. A faible force de traction, entre 1 N and 5 N dans le cas présent, la relation entre la contrainte et l'allongement est linéaire. Ainsi, la pente de la droite permet de déterminer le module élastique.

La contrainte à la rupture et l'allongement maximum sont mesurés pour chaque éprouvette, ce qui correspond à l'allongement à la rupture.

**Tableau 3 : Caractéristiques mécaniques des vitrimères obtenus dans l'exemple 1**

| % massique_{PHA} | 20 | 30 | 40 | 50 |
|---|---|---|---|---|
| Contrainte à la rupture (MPa) | 0,86 | 1,20 | 1,47 | 1,14 |
| Elongation à la rupture (%) | 58,10 | 53,99 | 39,22 | 27,88 |
| Module élastique (MPa) | 3,85 | 6,73 | 12,01 | 12,24 |

**Tableau 4 : Caractéristiques mécaniques des vitrimères obtenus dans l'exemple 2**

| % molaire_{EPO} | 20 | 30 | 40 | 50 | 60 |
|---|---|---|---|---|---|
| Contrainte à la rupture (MPa) | 1,41 | 1,93 | 1,92 | 2,06 | 2,68 |
| Elongation à la rupture (%) | 72,10 | 59,59 | 70,90 | 68,10 | 72,24 |
| Module élastique (MPa) | 10,27 | 13,78 | 9,93 | 9,34 | 11,15 |

Les vitrimères, obtenus dans les exemples 1 et 2, surmontent l'incompatibilité entre les polymères qui empêche généralement d'avoir un matériau homogène issus du mélange de deux polymères

Contrairement aux vitrimères de l'art antérieur, les vitrimères selon l'invention sont des matériaux relativement extensibles et résistant aux déchirures car l'allongement maximum peut dépasser 70% de la longueur initiale pour des contraintes à la rupture inférieures à 5 MPa. Le module élastique se situe entre 5 et 15 MPa.

Ainsi, les vitrimères selon l'invention peuvent être utilisés lors de la fabrication de produits plastique aux propriétés mécaniques ajustées plus vertueux d'un point de vue environnemental.

### Références

**[1]** Benaniba, M.T. and Massardier-Nageotte, V. (2010), Evaluation effects of biobased plasticizer on the thermal, mechanical, dynamical mechanical properties, and permanence of plasticized PVC. J. Appl. Polym. Sci., 118: 3499-3508. https://doi.org/10.1002/app.32713
**[2]** Jia P, Xia H, Tang K, Zhou Y. Plasticizers Derived from Biomass Resources: A Short Review. Polymers (Basel). 2018 Nov 24;10(12):1303. doi: 10.3390/polym10121303. PMID: 30961228; PMCID: PMC6401779.
**[3]** Audic, J., Lemiègre, L. and Corre, Y. (2014), Thermal and mechanical properties of a polyhydroxyalkanoate plasticized with biobased epoxidized broccoli oil. J. Appl. Polym. Sci., 131, doi: 10.1002/app.39983
**[4]** S. Nicolas, T. Richard, J. Dourdan, L. Lemiègre and J.-L. Audic, J. Appl. Polym. Sci., 2021, 138, 50904.
**[5]** 1M. Gobin, P. Loulergue, J.-L. Audic and L. Lemiègre, Indus. Crop. Prod., 2015, 70, 213-220.
**[6]** Capelot, M., Montarnal, D. Tournilhac, F., and Leibler L. (2012), Metal-Catalyzed Transesterification for Healing and Assembling of Thermosets Journal of the American Chemical Society 134 (18), 7664-7667 DOI: 10.1021/ja302894k

## Revendications

1. Vitrimère comprenant, sous une forme réticulée, une huile époxydée, un agent de réticulation, éventuellement un agent époxydé, et un polyhydroxyalcanoate de formule I : 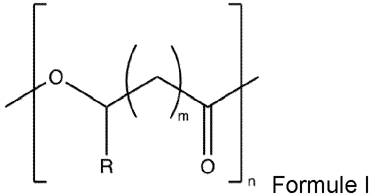 dans laquelle,
le, ou lesdits motifs pris indépendamment, étant tel que :
m varie de 0 à 20, de préférence de 1 à 6 ;
R est choisi parmi H et une chaine hydrocarbonée en C₁ à Ca ; et
n varie de 5 à 200.

2. Vitrimère selon la revendication 1, dans lequel l'huile époxydée est une huile végétale époxydée.

3. Vitrimère selon la revendication 2 dans lequel l'huile végétale est choisie parmi les huiles ayant au moins deux insaturations, de préférence l'huile végétale est choisie parmi l'huile de soja, de colza, de tournesol, d'olive, de palme, de lin, de graine de brocoli, de jatropha, de karanja, de polanga, de mahua et un mélange quelconque de ces dernières.

4. Vitrimère selon l'une quelconque des revendications précédentes, dans lequel l'agent de réticulation est di-, tri- ou tetra- fonctionnel.

5. Vitrimère selon l'une quelconque des revendications précédentes, dans lequel l'agent de réticulation comprend au moins deux fonctions acides, de préférence de deux à quatre fonctions acide carboxylique.

6. Vitrimère selon la revendication 4 ou 5, dans lequel l'agent de réticulation comprend au moins une chaine aliphatique, de préférence un groupe aromatique, comprenant de 2 à 20 carbones pour la chaine aliphatique et de 4 à 20 carbones pour le groupe aromatique.

7. Vitrimère selon l'une quelconque des revendications 4 à 6, dans lequel l'agent de réticulation est soluble à une température comprise de 20°C à 250°C dans l'huile époxydée et/ou a un point de fusion inférieur à 200°C.

8. Vitrimère selon l'une quelconque des revendications 4 à 7, dans lequel l'agent de réticulation est choisi parmi les acides glutarique, citrique, adipique, subérique, sébacique, dodécanedioïque, tétradécanedioïque, Hexadecanedioïque, o-phénylènediacétique et un mélange quelconque de ces derniers.

9. Vitrimère selon l'une quelconque des revendications précédentes, dans lequel le polyhydroxyalcanoate est choisi parmi : 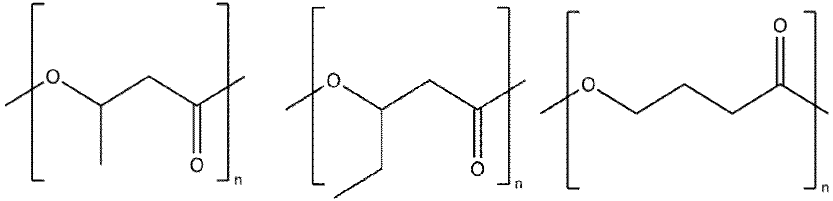 dans lesquels n varie de 5 à 200.

10. Utilisation d'un vitrimère selon l'une quelconque des revendications 1 à 9 pour fabriquer un produit plastique.

11. Procédé de fabrication d'un vitrimère selon l'une quelconque des revendications 1 à 9 comprenant une étape de réticulation d'une huile époxydée, d'un agent de réticulation, d'un agent époxydé optionnel et d'un polyhydroxyalcanoate de formule I : 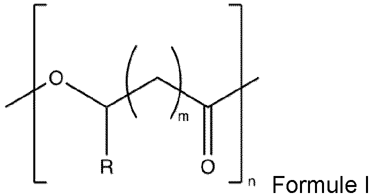 dans laquelle,
le, ou lesdits motifs pris indépendamment, étant tel que :
m varie de 0 à 20, de préférence de 1 à 6;
R est choisi parmi H et une chaine hydrocarbonée en C₁ à Ca ; et
n varie de 5 à 200,
et obtention du vitrimère.

12. Procédé de fabrication d'un vitrimère selon la revendication 11, dans lequel l'étape de réticulation est réalisée sans solvant à une température comprise entre 80 et 200°C pendant une durée comprise entre 30 min et 48h.

13. Procédé de fabrication d'un vitrimère selon l'une quelconque des revendications 11 à 12, comprenant une étape préalable d'hydrolyse d'un polyhydroxyalcanoate de formule Il : 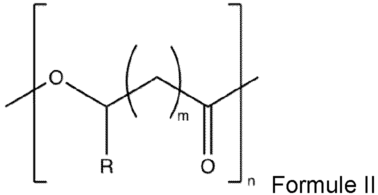 dans laquelle,
le, ou lesdits motifs pris indépendamment, étant tel que :
m varie de 0 à 20, de préférence de 1 à 6;
R est choisi parmi H et une chaine hydrocarbonée en C₁ à C₈ ; et
n varie de 10 à 2000.

14. Procédé de fabrication d'un vitrimère selon la revendication 13, dans lequel l'étape d'hydrolyse est une hydrolyse enzymatique, thermique ou chimique.

15. Procédé de fabrication d'un vitrimère selon l'une quelconque des revendications 13 à 14, dans lequel l'étape d'hydrolyse est réalisée dans un solvant comprenant du chloroforme et du dichlorométhane à une température comprise entre 40 et 100°C pendant une durée comprise entre 15 min et 5 h.
